# EUROPÄISCHE PATENTSCHRIFT

(11) **EP 2 058 717 B1**
(45) Veröffentlichungstag und Bekanntmachung des Hinweises auf die Patenterteilung: **20.07.2011**
(21) Anmeldenummer: 07021943.1
(22) Anmeldetag: 12.11.2007
(51) Int. Cl.: G05B 19/4069

(54) **Verfahren und Einrichtung zum Betrieb einer Werkzeugmaschine**
Method and device for operating a machine tool
Procédé et dispositif destinés au fonctionnement d'une machine-outil

(43) Veröffentlichungstag der Anmeldung: 13.05.2009
(73) Patentinhaber: SIEMENS AKTIENGESELLSCHAFT, 80333 München (DE)
(72) Erfinder: Schneider, Roland, Dr., 91058 Erlangen (DE)

(56) Entgegenhaltungen:
- EP-A- 1 186 976
- JP-A- 61 095 407

## Beschreibung

Die Erfindung betrifft ein Verfahren und eine Einrichtung zum Betrieb einer Werkzeugmaschine.

Zur Sicherstellung der Kollisionsfreiheit, der Bearbeitungszeit und der Fehlerfreiheit von Teileprogrammen zur Herstellung von Werkstücken auf Werkzeugmaschinen werden die Teileprogramme zunehmend vor dem eigentlichen realen Bearbeitungsvorgang auf der realen Werkzeugmaschine mitsamt einer Nachbildung der realen Werkzeugmaschine, simuliert. Erst nach erfolgreich durchgeführter Simulation wird das Teileprogramm zur realen Werkzeugmaschine gebracht und der Bearbeitungsvorgang mit Hilfe des Teileprogramms gesteuert. Dies ist z.B. aus der EP 1 186 976 bekannt.

Durch die Simulation kann aber eine zusätzliche Sicherheit hinsichtlich der Kriterien Kollisionsfreiheit, Bearbeitungszeit und Fehlerfreiheit nur gewonnen werden, wenn die Konfiguration der nachgebildeten Werkzeugmaschine in der Simulation mit der aktuellen Konfiguration der Werkzeugmaschine, d.h. mit der tatsächlich zum Zeitpunkt des Bearbeitungsvorgangs an der realen Werkzeugmaschine vorhandenen Konfiguration, übereinstimmt.

Beispielhaft für eine solche Konfiguration sind z.B.:
1. Werkzeugbestückdaten, z.B. in Form von Werkzeuglängen, Werkzeughaltergeometrien und verwendete Magazinplätze im Werkzeugwechsel,
2. Rohteildaten, wie z.B. Lage und Geometrie des Rohteils,
3. Werkzeugspannelementdaten wie z.B. Lage und Geometrie der spannelemente zum Einspannen des Rohteils,
4. Softwarekonfiguration, z.B. in Form von Steuerungssoftwareversion und/oder Parametrierung von Steuerung und Antrieben.

Das durch die "erfolgreiche" Simulation hervorgerufene Vertrauen in die Qualität des solchermaßen getesteten Teileprogramms, sowie dem Verlangen nach immer schnelleren Fertigungszeiten, führt in der Praxis häufig dazu, dass auf weitere Tests an der realen Werkzeugmaschine (z.B. Durchführen des Bearbeitungsvorgang mit stark reduzierten Vorschub) verzichtet wird. Häufig stimmt jedoch die aktuelle Konfiguration, d.h. die Konfiguration, die tatsächlich zum Zeitpunkt des anstehenden Bearbeitungsvorgangs an der Werkzeugmaschine vorhanden ist, nicht mit der in der Simulation verwendeten Konfiguration, nachfolgend Simulationskonfiguration genannt, überein. Dies kann im schlimmsten Fall dazu führen kann, dass ein "erfolgreich" simuliertes Teileprogramm trotzdem zu Beschädigungen an der realen Werkzeugmaschine oder zu kostenintensivem Ausschuss von Werkstücken führt. Falsch berechnete Bearbeitungszeiten führen zu dem zu einer verschlechterten Planbarkeit von Durchlaufzeiten und Maschinenbewegungen.

Es ist Aufgabe der Erfindung ein Verfahren und eine Einrichtung zum Betrieb einer Werkzeugmaschine zu schaffen, bei der Fehler im Bearbeitungsvorgang, die von einer Nichtübereinstimmung der Konfiguration der Werkzeugmaschine, die bei der Simulation des Teileprogramms verwendet wurde und der Konfiguration der realen Werkzeugmaschine beim realen Bearbeitungsvorgang, herrühren, vermieden werden.

Diese Aufgabe wird gelöst durch ein Verfahren zum Betrieb einer Werkzeugmaschine, wobei ein Bearbeitungsvorgang der Werkzeugmaschine mittels eines Teileprogramms steuerbar ist, wobei eine aktuelle Konfiguration der Werkzeugmaschine ermittelt wird, wobei die aktuelle Konfiguration mit einer in dem Teileprogramm hinterlegten Simulationskonfiguration der Werkzeugmaschine verglichen wird, wobei bei Nichtübereinstimmung von aktueller Konfiguration mit der Simulationskonfiguration eine Warnmeldung erzeugt wird.

Weiterhin wird diese Aufgabe gelöst, durch eine Einrichtung zum Betrieb einer Werkzeugmaschine, wobei die Einrichtung den

Bearbeitungsvorgang der Werkzeugmaschine mittels eines Teileprogramms steuert, wobei die Einrichtung derart ausgebildet ist, dass von der Einrichtung eine aktuelle Konfiguration der Werkzeugmaschine ermittelbar ist und die aktuelle Konfiguration mit einer in dem Teileprogramm hinterlegten Simulationskonfiguration der Werkzeugmaschine von der Einrichtung vergleichbar ist und bei Nichtübereinstimmung von aktueller Konfiguration mit der Simulationskonfiguration eine Warnmeldung von der Einrichtung erzeugbar ist.

Vorteilhafte Ausbildungen der Erfindung ergeben sich aus den abhängigen Ansprüchen.

Vorteilhafte Ausbildungen des Verfahren ergeben sich analog zu vorteilhaften Ausbildungen der Einrichtung und umgekehrt.

Es erweist sich als vorteilhaft, wenn bei Übereinstimmung von aktueller Konfiguration und Simulationskonfiguration der Bearbeitungsvorgang gestartet wird und bei Nichtübereinstimmung von aktueller Konfiguration mit der Simulationskonfiguration der Bearbeitungsvorgang nicht gestartet wird, da durch diese Maßnahme z.B. Beschädigungen an der Werkzeugmaschine und/oder das Fertigen von fehlerhaften Werkstücken sicher vermieden werden.

Ferner erweist es sich als vorteilhaft, wenn die Simulationskonfiguration verschlüsselt in dem Teileprogramm hinterlegt ist und entschlüsselt wird. Hierdurch wird die Möglichkeit einer Manipulation der im Teileprogramm hinterlegten Simulationskonfiguration verhindert.

Ferner erweist es sich als vorteilhaft, wenn zumindest Teile der aktuellen Konfiguration mit Hilfe einer Bilderfassungseinrichtung und/oder eines Sensors und/oder einer Messeinrichtung ermittelt werden. Die aktuelle Konfiguration kann hierdurch automatisiert ermittelt werden.

Ferner erweist es sich als vorteilhaft, wenn die aktuelle Konfiguration in Form von Werkzeugbestückdaten und/oder Rohteildaten und/oder Werkzeugspannelementdaten und/oder der Softwarekonfiguration vorliegt. Eine solche Ausbildung der aktuellen Konfiguration stellt eine übliche Ausbildung der aktuellen Konfiguration einer Werkzeugmaschine dar.

Weiterhin erweist es sich als vorteilhaft, wenn das Teileprogramm erstellt wird, indem der Bearbeitungsvorgang unter Verwendung einer Simulationskonfiguration der Werkzeugmaschine und einem Teileprogramm bei dem die Simulationskonfiguration noch nicht hinterlegt ist, simuliert wird und anschließend die Simulationskonfiguration in dem Teileprogramm bei dem die Simulationskonfiguration noch nicht hinterlegt ist, hinterlegt wird. Hierdurch wird auf einfache Art und Weise ein Teileprogramm erstellt, bei dem die Simulationskonfiguration hinterlegt ist.

Ferner erweist es sich als vorteilhaft, wenn die Simulationskonfiguration verschlüsselt hinterlegt wird, da hierdurch ein späteres Manipulieren der Simulationskonfiguration im Teileprogramm verhindert wird.

Weiterhin erweist es sich als vorteilhaft, wenn bei Übereinstimmung von aktueller Konfiguration und Simulationskonfiguration der Bearbeitungsvorgang von der Einrichtung gestartet wird und bei Nichtübereinstimmung von aktueller Konfiguration mit der Simulationskonfiguration von der Einrichtung der Bearbeitungsvorgang nicht gestartet wird, da durch diese Maßnahme z.B. Beschädigungen an der Werkzeugmaschine und/oder das Fertigen von fehlerhaften Werkstücken sicher vermieden werden.

Weiterhin erweist es sich als vorteilhaft, wenn die Simulationskonfiguration verschlüsselt in dem Teileprogramm hinterlegt ist und von der Einrichtung entschlüsselbar ist. Hierdurch wird die Möglichkeit einer Manipulation der im Teileprogramm hinterlegten Simulationskonfiguration verhindert.

Weiterhin erweist es sich als vorteilhaft, wenn zumindest Teile der aktuellen Konfiguration mit Hilfe einer Bilderfassungsseinrichtung und/oder eines Sensors und/oder einer Messeinrichtung von der Einrichtung ermittelbar sind. Die aktuelle Konfiguration kann hierdurch automatisiert ermittelt werden.

Weiterhin erweist es sich als vorteilhaft, wenn die aktuelle Konfiguration in Form von Werkzeugbestückdaten und/oder Rohteildaten und/oder Werkzeugspannelementdaten und/oder der Softwarekonfiguration vorliegt. Eine solche Ausbildung der aktuellen Konfiguration stellt eine übliche Ausbildung der aktuellen Konfiguration einer Werkzeugmaschine dar.

Ferner erweist es sich als vorteilhaft, wenn die Einrichtung derart ausgebildet ist, dass von der Einrichtung das Teileprogramm erstellt wird, indem der Bearbeitungsvorgang unter Verwendung einer Simulationskonfiguration der Werkzeugmaschine und einem Teileprogramm bei dem die Simulationskonfiguration noch nicht hinterlegt ist, simuliert wird und anschließend die Simulationskonfiguration in dem Teileprogramm bei dem die Simulationskonfiguration noch nicht hinterlegt ist, hinterlegt wird. Hierdurch wird auf einfache Art und Weise ein Teileprogramm erstellt, bei dem die Simulationskonfiguration hinterlegt ist.

Ferner erweist es sich als vorteilhaft, wenn die Simulationskonfiguration in dem Teileprogramm verschlüsselt hinterlegt wird, da hierdurch ein späteres Manipulieren der Simulationskonfiguration im Teileprogramm verhindert wird.

Weiterhin erweist es sich als vorteilhaft, eine Werkzeugmaschine mit der erfindungsgemäßen Einrichtung auszubilden.

Ein Ausführungsbeispiel der Erfindung ist in der Zeichnung dargestellt und wird im Folgenden näher erläutert. Dabei zeigen:
- FIG 1: eine erfindungsgemäße Einrichtung zum Betrieb einer Werkzeugmaschine,
- FIG 2: ein erfindungsgemäßes Verfahren zum Betrieb einer Werk- zeugmaschine und
- FIG 3: ein erfindungsgemäßes Teileprogramm

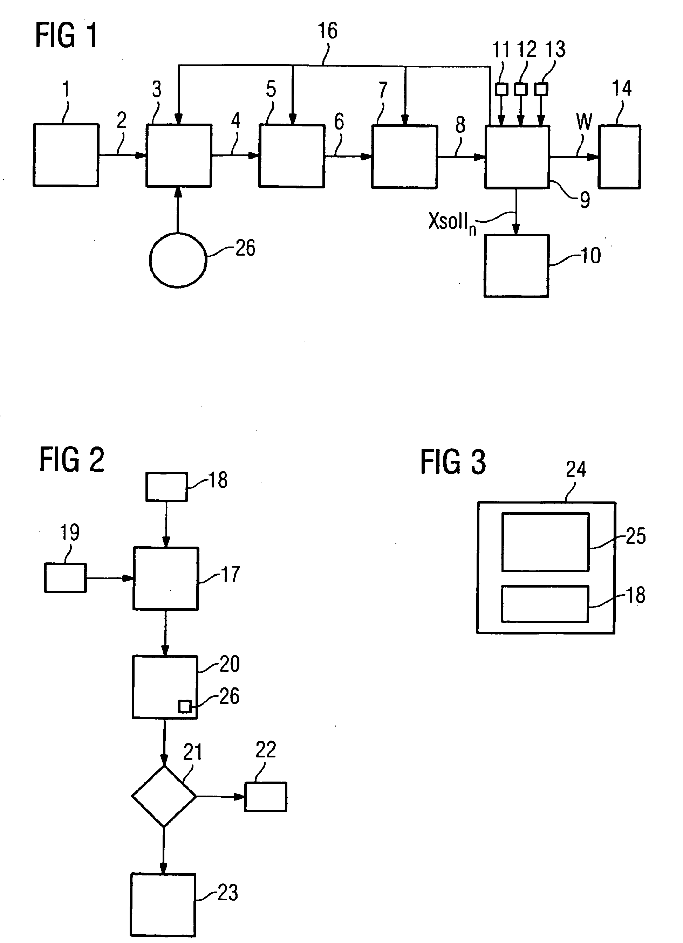

In FIG 1 ist in Form einer schematisierten Darstellung in Form eines Blockschaltbildes die erfindungsgemäße Einrichtung dargestellt. Handelsüblich beginnt der Herstellungsprozess eines zu fertigenden Werkstücks mit der Modellierung des Werkstücks auf einem CAD-System 1 (Computer Aided Design). Die mit Hilfe des CAD-System 1 solchermaßen bestimmten Geometriedaten des Werkstücks werden als Eingangsgröße an ein CAM-System 3 (Computer Aided Manufacturing) weitergeleitet, was durch einen Pfeil 2 dargestellt ist. Mit Hilfe des CAM-Systems 3 werden aus den Geometriedaten des zu fertigenden Werkstücks und der späteren Konfiguration der Werkzeugmaschine, sowie den Geometriedaten eines Rohteils, das das Ausgangsteil für den Bearbeitungsvorgang später an der Werkzeugmaschine bildet, z.B. bei einer Fräsbearbeitung, die Fräsbahnen ermittelt, die zur Herstellung des aus dem Rohteil zufertigen Werkstücks von den Maschinenachsen der Werkzeugmaschine abzufahren sind. Solchermaßen werden die Bewegungen der Maschinenachsen, die zur Herstellung des Werkstücks notwendig sind vom CAM-System 3 bestimmt und als Eingangsgröße einem sogenannten Post-Prozessor 5 zur Verfügung stellt, was durch einen Pfeil 4 in FIG 1 dargestellt ist.

Der Post-Prozessor 5, der in Form eines Programms, das auf einem Rechner abläuft, vorliegt, erzeugt aus den vom CAM-System ermittelten Bewegungen der Maschinenachsen und der späteren Konfiguration der Werkzeugmaschine ein Teileprogramm, insbesondere ein NC-Teileprogramm mit Hilfe dessen später die Steuereinrichtung der Werkzeugmaschine den Bearbeitungsvorgang der Werkzeugmaschine, steuert um das Werkstück aus dem Rohling herzustellen.

Das Teileprogramm liegt dabei in der Regel in Form einer Datei vor, die in ASCII-Code zeilenweise hintereinander in der Regel in DIN-Code geschriebne Befehle enthält. Ein solcher Befehl (z.B. G3 X115 Y113.3 I-93 J25.52) kann z.B. darin bestehen, ein Werkzeug (z.B. einen Fräser) entlang eines Kreisbahnabschnitts zu einer Ziellage zu bewegen um aus dem Rohteil z.B. eine Aussparung auszufräsen. Die einzelnen Befehle des Teileprogramms werden später von der Steuereinrichtung 9 der Werkzeugmaschine eingelesen. Die Steuereinrichtung 9 berechnet entsprechend den Befehlen des Teileprogramms Lagesollwerte Xsollₙ für jeden Antrieb n des Antriebssystems 10 der Werkzeugmaschine.

Zur Sicherheit wird jedoch handelsüblich, nachdem der Post-Prozessor 5 das Teileprogramm erstellt hat, das Teileprogramm an eine Simulationseinheit 7, die z.B. in Form eines Simulationsprogramms, dass auf einem Rechner abläuft, ausgebildet sein kann, weitergeleitet, was durch einen Pfeil 6 dargestellt ist. Mit Hilfe der Simulationseinheit 7, die eine mehr oder weniger detailgetreue Nachbildung der Werkzeugmaschine beinhaltet, wird der spätere reale Bearbeitungsvorgang simuliert und solchermaßen das vom Post-Prozessor 5 erzeugte Teileprogramm überprüft, ob z.B. während des Bearbeitungsvorgangs Kollision von Maschinenelementen untereinander oder mit dem Rohling auftreten und/oder ob die vorgesehenen Bearbeitungszeiten und Bearbeitungsgenauigkeiten eingehalten werden. Falls die Simulation erfolgreich verläuft, d.h. der Bearbeitungsvorgang fehlerfrei mit dem gewünschten Resultat abläuft, wird das solchermaßen getestete Teileprogramm an die Steuereinrichtung 9 übermittelt, was durch einen Pfeil 8 in FIG 1 dargestellt ist und der reale Bearbeitungsvorgang der Werkzeugmaschine kann starten.

In der Praxis treten jedoch trotzdem häufig Fehler bei dem Bearbeitungsvorgang auf die zu Beschädigungen von Maschinenelementen der Werkzeugmaschine oder zu einer unzureichenden Qualität des Werkstücks z.B. hinsichtlich Fertigungsgenauigkeiten führt. Die Ursache hierfür liegt häufig darin, dass die bei der Simulation durch die Simulationseinheit 7 verwendete Konfiguration der Werkzeugmaschine, nachfolgend Simulationskonfiguration genannt, nicht mit der später tatsächlich vorhandenen aktuellen Konfiguration der realen Werkzeugmaschine übereinstimmt. So kann z.B. die Simulation mit einer Simulationskonfiguration der Werkzeugmaschine durchgeführt werden, bei der angenommen wird, dass ein Bohrer mit einem Durchmesser von 8 mm an einer bestimmten Stelle des Werkzeugmagazins des Werkzeugwechslers vorhanden ist, tatsächlich aber jedoch später an der realen Werkzeugmaschine, an der bestimmten Stelle, ein Bohrer mit Querschnitt 10 vorhanden ist.

Hier setzt nun das erfindungsgemäße Verfahren an. Erfindungsgemäß wird von der Simulationseinheit 7 in dem Teileprogramm das vom Post-Prozessor 5 erzeugt wurde, die Simulationskonfiguration, d.h. die Konfiguration der Werkzeugmaschine mit der die Simulation durchgeführt wurde, in dem Teileprogramm hinterlegt. Es wird solchermaßen von der Simulationseinheit 7 ein Teileprogramm erstellt, in dem der Bearbeitungsvorgang unter Verwendung einer Simulationskonfiguration einer Werkzeugmaschine und einem Teileprogramm bei dem Simulationskonfiguration noch nicht hinterlegt ist, simuliert wird und anschließend die Simulationskonfiguration in dem Teileprogramm hinterlegt wird. Das solchermaßen erstellte Teileprogramm 24 ist in FIG 3 dargestellt. Das Teileprogramm 24 besteht solchermaßen aus den Befehlen 25 des Teileprogramms aus dem Post-Prozessor 5 und der Simulationskonfiguration 18. Das Teileprogramm 24 liegt dabei in der Regel in Form einer Datei vor, die die Befehle 25 und die Simulationskonfiguration 18 enthält. Die Hinterlegung der Simulationskonfiguration 18 im Teileprogramm geschieht dabei z.B. durch Abspeicherung der Simulationskonfiguration 18 in der Datei.

Erfindungsgemäß ermittelt die Steuereinrichtung 9 der Werkzeugmaschine bevor sie den Bearbeitungsvorgang der Werkzeugmaschine startet die aktuelle Konfiguration der Werkzeugmaschine, z.B. anhand einer in die Werkzeugmaschine eingebauten Bilderfassungseinrichtung 11, eines Sensors 12 und/oder eine in die Werkzeugmaschine integrierten Messeinrichtung 13. Mit Hilfe der Bilderfassungsseinrichtung 11, die z.B. in Form einer Kamera vorliegen kann, kann z.B. die momentane Lage von Werkzeugspannelementen (Werkzeugspannelementdaten) sowie die Lage des Rohteils (Rohteildaten) erfasst werden. Mit Hilfe eines Sensors 12 lässt sich z.B. die Bestückung mit Werkzeugen des Werkzeugwechsels erfassen. Mit Hilfe der Messeinrichtung 13 lässt sich z.B. die Bemaßung des Rohteils erfassen. Nachdem die aktuelle Konfiguration der Werkzeugmaschine solchermaßen automatisiert ermittelt wurde, wird die aktuelle Konfiguration mit der in dem Teileprogramm hinterlegten Simulationskonfiguration 18 der Werkzeugmaschine verglichen, wobei bei Nichtübereinstimmung von aktueller Konfiguration mit der Simulationskonfiguration eine Warnmeldung W erzeugt und z.B. an eine Bedieneinheit 14 übermittelt und auf der Bedieneinheit 14 den Bediener visualisiert, wird. Nur bei Übereinstimmung von aktueller Konfiguration und Simulationskonfiguration wird der Bearbeitungsvorgang von der Steuereinrichtung 9 gestartet. Im Rahmen des Ausführungsbeispiels wird dabei die Simulationskonfiguration von der Simulationseinheit 7 verschlüsselt im Teileprogramm 24 hinterlegt und die Steuereinrichtung 9 entschlüsselt die in dem Teileprogramm hinterlegte Simulationskonfiguration 18 bevor die sie die aktuelle Konfiguration mit der Simulationskonfiguration vergleicht. Hierdurch können spätere Manipulationen an der im Teileprogramm hinterlegten Simulationskonfiguration sicher verhindert werden.

Weiterhin ist es von Vorteil, wenn die automatisiert ermittelte aktuelle Konfiguration auf das CAM-System 3 und/oder den Post-Prozessor 5 und/oder an die Simulationseinheit 7 übertragen werden, was durch Pfeile 16 dargestellt ist. Eine manuelle Ermittelung und/oder Anpassung der im CAM-System, im Post-Prozessor und bei der Simulation verwendeten Konfiguration der Werkzeugmaschine kann somit entfallen.

Die Einrichtung zum Betrieb einer Werkzeugmaschine kann im einfachsten Fall lediglich in Form einer Steuereinrichtung 9 zur Steuerung der Werkzeugmaschine, ohne die Simulationseinheit 7, ausgebildet sein.

Die Einrichtung zum Betrieb einer Werkzeugmaschine kann aber auch als ein System, bestehend aus der Steuereinrichtung 9 und einem davon baulich getrennten, z.B. in einem Büro aufgestellten Rechner sein, auf der die Simulationseinheit 7 in Form eines Simulationsprogramms abläuft, ausgebildet sein. Weiterhin ist es aber in diesem Zusammenhang auch möglich, dass die Einrichtung zum Betrieb der Werkzeugmaschine in Form der Steuereinrichtung 9 vorliegt und die Simulationseinheit 7, z.B. in Form eines Programms, auf der Steuereinrichtung 9 abläuft und somit integraler Bestandteil der Steuereinrichtung 9 ist.

Die Steuereinrichtung 9 kann z.B. als numerische Steuerung (NC-Steuerung) ausgebildet sein.

In FIG 2 ist das erfindungsgemäße Verfahren in Form eines Ablaufdiagramms noch einmal schematisiert dargestellt. Das Teileprogramm 19, das zu diesem Zeitpunkt auch keine Simulationskonfiguration enthält, wird unter Berücksichtigung der Simulationskonfiguration 18 im Rahmen einer Simulation 17 getestet und ein Teileprogramm 24 bei dem die Simulationskonfiguration 18 hinterlegt ist, erzeugt. Anschließens erfolgt die Ermittlung 20 der aktuellen Konfiguration 26 der Werkzeugmaschine, wobei nachfolgend ein Vergleich 21 der aktuellen Konfiguration 26 mit der Simulationskonfiguration durchgeführt wird. Falls die aktuelle Konfiguration nicht mit der Simulationskonfiguration übereinstimmt, erfolgt die Erzeugung 22 einer Warnmeldung. Falls die aktuelle Konfiguration mit der Simulationskonfiguration übereinstimmt, erfolgt der Start 23 des Bearbeitungsvorgangs.

## Patentansprüche

1. Verfahren zum Betrieb einer Werkzeugmaschine, wobei ein Bearbeitungsvorgang der Werkzeugmaschine mittels eines Teileprogramms (24) steuerbar ist, **dadurch gekennzeichnet, dass** eine aktuelle Konfiguration (26) der Werkzeugmaschine ermittelt wird, dass die aktuelle Konfiguration (26) mit einer in dem Teileprogramm (24) hinterlegten Simulationskonfiguration (18) der Werkzeugmaschine verglichen wird, und dass bei Nichtübereinstimmung von aktueller Konfiguration mit der Simulationskonfiguration (18) eine Warnmeldung (W) erzeugt wird.

2. Verfahren nach Anspruch 1, **dadurch gekennzeichnet, dass** bei Übereinstimmung von aktueller Konfiguration (26) und Simulationskonfiguration (18) der Bearbeitungsvorgang gestartet wird und bei Nichtübereinstimmung von aktueller Konfiguration (26) mit der Simulationskonfiguration (18) der Bearbeitungsvorgang nicht gestartet wird.

3. Verfahren nach einem der vorherigen Ansprüche, **dadurch gekennzeichnet, dass** die Simulationskonfiguration (18) verschlüsselt in dem Teileprogramm (24) hinterlegt ist und entschlüsselt wird.

4. Verfahren nach einem der vorherigen Ansprüche, **dadurch gekennzeichnet, dass** zumindest Teile der aktuellen Konfiguration (26) mit Hilfe einer Bilderfassungseinrichtung (11) und/oder eines Sensors (12) und/oder einer Messeinrichtung (13) ermittelt werden.

5. Verfahren nach einem der vorherigen Ansprüche, **dadurch gekennzeichnet, dass** die aktuelle Konfiguration (26) in Form von Werkzeugbestückdaten und/oder Rohteildaten und/oder Werkzeugspannelementdaten und/oder der Softwarekonfiguration vorliegt.

6. Verfahren nach einem der vorherigen Ansprüche, **dadurch gekennzeichnet, dass** das Teileprogramm (24) erstellt wird, indem der Bearbeitungsvorgang unter Verwendung einer Simulationskonfiguration der Werkzeugmaschine und einem Teileprogramm (19) bei dem die Simulationskonfiguration (18) noch nicht hinterlegt ist, simuliert wird und anschließend die Simulationskonfiguration (18) in dem Teileprogramm (19) bei dem die Simulationskonfiguration (18) noch nicht hinterlegt ist, hinterlegt wird.

7. Verfahren nach Anspruch 6, **dadurch gekennzeichnet, dass** die Simulationskonfiguration (18) verschlüsselt hinterlegt wird.

8. Einrichtung (9) zum Betrieb einer Werkzeugmaschine, wobei die Einrichtung (15) den Bearbeitungsvorgang der Werkzeugmaschine mittels eines Teileprogramms (24) steuert, **dadurch gekennzeichnet, dass** die Einrichtung (9) derart ausgebildet ist, dass von der Einrichtung (9) eine aktuelle Konfiguration (26) der Werkzeugmaschine ermittelbar ist und die aktuelle Konfiguration (26) mit einer in dem Teileprogramm (24) hinterlegten Simulationskonfiguration (18) der Werkzeugmaschine von der Einrichtung (9) vergleichbar ist und bei Nichtübereinstimmung von aktueller Konfiguration (26) mit der Simulationskonfiguration (18) eine Warnmeldung (W) von der Einrichtung (9) erzeugbar ist.

9. Einrichtung nach Anspruch 8, **dadurch gekennzeichnet, dass** bei Übereinstimmung von aktueller Konfiguration (26) und Simulationskonfiguration (18) der Bearbeitungsvorgang von der Einrichtung (9) gestartet wird und bei Nichtübereinstimmung von aktueller Konfiguration (26) mit der Simulationskonfiguration (18) von der Einrichtung (9) der Bearbeitungsvorgang nicht gestartet wird.

10. Einrichtung nach Anspruch 8 oder 9, **dadurch gekennzeichnet, dass** die Simulationskonfiguration (18) verschlüsselt in dem Teileprogramm (24) hinterlegt ist und von der Einrichtung (9) entschlüsselbar ist.

11. Einrichtung nach einem der Ansprüche 8 bis 10, **dadurch gekennzeichnet, dass** zumindest Teile der aktuellen Konfiguration mit Hilfe einer Bilderfassungseinrichtung (11) und/oder eines Sensors (12) und/oder einer Messeinrichtung (13) von der Einrichtung (9) ermittelbar sind.

12. Einrichtung nach einem der Ansprüche 8 bis 11, **dadurch gekennzeichnet, dass** die aktuelle Konfiguration (26) in Form von Werkzeugbestückdaten und/oder Rohteildaten und/oder Werkzeugspannelementdaten und/oder der Softwarekonfiguration vorliegt.

13. Einrichtung nach einem der Ansprüche 8 bis 12, **dadurch gekennzeichnet, dass** die Einrichtung derart ausgebildet ist, dass von der Einrichtung (7,9) das Teileprogramm (24) erstellt wird, indem der Bearbeitungsvorgang unter Verwendung einer Simulationskonfiguration (18) der Werkzeugmaschine und einem Teileprogramm (19) bei dem die Simulationskonfiguration (18) noch nicht hinterlegt ist, simuliert wird und anschließend die Simulationskonfiguration (18) in dem Teileprogramm (19) bei dem die Simulationskonfiguration (18) noch nicht hinterlegt ist, hinterlegt wird.

14. Einrichtung nach Anspruch 13, **dadurch gekennzeichnet, dass** die Simulationskonfiguration (18) in dem Teileprogramm (24) verschlüsselt hinterlegt wird.

15. Werkzeugmaschine mit einer Einrichtung nach einem der Ansprüche 8 bis 14.

## Claims

1. Method for operating a machine tool, wherein a machining operation of the machine tool can be controlled by means of a part program (24), **characterized in that** a present configuration (26) of the machine tool is determined, **in that** the present configuration (26) is compared to a simulation configuration (18) of the machine tool stored in the part program (24), and **in that** a warning message (W) is generated in the case where the present configuration does not conform to the simulation configuration (18).

2. Method according to Claim 1, **characterized in that** the machining operation is initiated if the present configuration (26) and the simulation configuration (18) conform and the machining operation is not initiated if the present configuration (26) and the simulation configuration (18) do not conform.

3. Method according to one of the preceding claims, **characterized in that** the simulation configuration (18) is stored in an encrypted fashion in the part program (24) and is decrypted.

4. Method according to one of the preceding claims, **characterized in that** at least parts of the present configuration (26) are determined using an image acquisition device (11) and/or a sensor (12) and/or a measuring device (13) .

5. Method according to one of the preceding claims, **characterized in that** the present configuration (26) is available in the form of data relating to the tool-equipment and/or the raw parts and/or the tool clamping pieces and/or the present configuration (26) is available in the form of the software configuration.

6. Method according to one of the preceding claims, **characterized in that** the part program (24) is generated by simulating the machining operation, using a simulation configuration of the machine tool and a part program (19) in which the simulation configuration (18) has not yet been stored, and subsequently storing the simulation configuration (18) in the part program (19) in which the simulation configuration (18) has not yet been stored.

7. Method according to Claim 6, **characterized in that** the simulation configuration (18) is stored in an encrypted fashion.

8. Device (9) for operating a machine tool, wherein the device (15) controls the machining operation of the machine tool by means of a part program (24), **characterized in that** the device (9) is designed such that a present configuration (26) of the machine tool can be determined by the device (9) and the device (9) can compare the present configuration (26) to a simulation configuration (18) of the machine tool stored in the part program (24) and a warning message (W) can be generated by the device (9) in the case where the present configuration does not conform to the simulation configuration (18).

9. Device according to Claim 8, **characterized in that** the machining operation is initiated by the device (9) if the present configuration (26) and the simulation configuration (18) conform and the machining operation is not initiated by the device (9) if the present configuration (26) and the simulation configuration (18) do not conform.

10. Device according to Claim 8 or 9, **characterized in that** the simulation configuration (18) is stored in the part program (24) in an encrypted fashion and that it can be decrypted by the device (9).

11. Device according to one of Claims 8 to 10, **characterized in that** at least parts of the present configuration can be determined by the device (9) using an image acquisition device (11) and/or a sensor (12) and/or a measuring device (13).

12. Device according to one of Claims 8 to 11, **characterized in that** the present configuration (26) is available in the form of data relating to the tool-equipment and/or the raw parts and/or the tool clamping pieces and/or the present configuration (26) is available in the form of the software configuration.

13. Device according to one of Claims 8 to 12, **characterized in that** the device is designed such that the part program (24) is generated by the device (7, 9) by simulating the machining operation, using a simulation configuration (18) of the machine tool and a part program (19) in which the simulation configuration (18) has not yet been stored, and subsequently storing the simulation configuration (18) in the part program (19) in which the simulation configuration (18) has not yet been stored.

14. Device according to Claim 13, **characterized in that** the simulation configuration (18) is stored in the part program (24) in an encrypted fashion.

15. Machine tool with a device according to one of Claims 8 to 14.

## Revendications

1. Procédé pour faire fonctionner une machine-outil, dans lequel une opération d'usinage de la machine-outil peut être commandé au moyen d'un sous-programme ( 24 ), **caractérisé en ce que** l'on détermine une configuration ( 26 ) présente de la machine-outil, **en ce que** l'on compare la configuration ( 26 ) présente à une configuration ( 18 ) de simulation de la machine-outil mémorisée dans le sous-programme ( 24 ) et **en ce que**, si la configuration présente ne coïncide pas avec la configuration ( 18 ) de simulation, on produit un message ( W ) d'avertissement.

2. Procédé suivant la revendication 1, **caractérisé en ce que**, si la configuration ( 26 ) présente et la configuration ( 18 ) de simulation coïncident, on lance la configuration d'usinage et, si la configuration ( 26 ) présente ne coïncide pas avec la configuration ( 18 ) de simulation, on ne lance pas l'opération d'usinage.

3. Procédé suivant l'une des revendications précédentes, **caractérisé en ce que** l'on mémorise la configuration ( 18 ) de simulation de manière chiffrée dans le sous-programme ( 24 ) et on la déchiffre.

4. Procédé suivant l'une des revendications précédentes, **caractérisé en ce que** l'on détermine au moins des parties de la configuration ( 26 ) présente à l'aide d'un dispositif ( 11 ) d'acquisition d'image et/ou d'un capteur de ( 12 ) et/ou d'un dispositif ( 13 ) de mesure.

5. Procédé suivant l'une des revendications précédentes, **caractérisé en ce que** la configuration ( 26 ) présente se présente sous la forme de données d'outillage d'outil et/ou de sous-données brutes et/ou de données d'éléments de serrage d'outil et/ou de la configuration logicielle.

6. Procédé suivant l'une des revendications précédentes, **caractérisé en ce que** l'on élabore le sous-programme ( 24 ) en simulant l'opération d'usinage, en utilisant une configuration de simulation de la machine-outil et un sous-programme ( 19 ) dans lequel la configuration ( 18 ) de simulation n'est pas encore mémorisée et ensuite en mémorisant la configuration ( 18 ) de simulation dans le sous-programme ( 19 ) dans lequel la configuration ( 18 ) de simulation n'est pas encore mémorisée.

7. Procédé suivant la revendication 6, **caractérisé en ce que** l'on mémorise la configuration ( 18 ) de simulation de manière chiffrée.

8. Dispositif ( 9 ) pour faire fonctionner une machine-outil, le dispositif ( 15 ) commandant l'opération d'usinage de la machine-outil au moyen d'un sous-programme ( 29 ), **caractérisé en ce que** le dispositif ( 9 ) est constitué de manière à ce qu'une configuration ( 26 ) présente de la machine-outil puisse être déterminée par le dispositif ( 9 ) et de manière à ce que la configuration ( 26 ) présente puisse être comparée par le dispositif ( 9 ) à une configuration ( 18 ) de simulation de la machine-outil mémorisée dans le sous-programme ( 24 ) et, si la configuration ( 26 ) présente ne coïncide pas avec la configuration (18) de simulation, à pouvoir produire un message ( W ) d'avertissement par le dispositif ( 9 ).

9. Dispositif suivant la revendication 8, **caractérisé en ce que**, si la configuration ( 26 ) présente et la configuration ( 18 ) de simulation coïncident, l'opération d'usinage est lancée par le dispositif ( 9 ) et, si la configuration ( 26 ) présente et la configuration ( 18 ) de simulation ne coïncident pas, l'opération d'usinage n'est pas lancée par le dispositif ( 9 ).

10. Dispositif suivant la revendication 8 ou 9, **caractérisé en ce que** la configuration ( 18 ) de simulation est mémorisée de manière chiffrée dans le sous-programme ( 24 ) et peut être déchiffrée par le dispositif ( 9 ).

11. Dispositif suivant l'une des revendications 8 à 10, **caractérisé en ce qu'**au moins des parties de la configuration présente peuvent être déterminées par le dispositif ( 9 ) à l'aide d'un dispositif ( 11 ) d'acquisition d'image et/ou d'un capteur ( 12 ) et/ou d'un dispositif ( 13 ) de mesure.

12. Dispositif suivant l'une des revendications 8 à 11, **caractérisé en ce que** la configuration ( 26 ) présente se présente sous la forme de données d'outillage d'outil et/ou de sous-données brutes et/ou de données d'élément de serrage d'outil et/ou de la configuration logicielle.

13. Dispositif suivant l'une des revendications 8 à 12, **caractérisé en ce que** le dispositif est constitué de manière à ce que le sous-programme ( 24 ) soit élaboré par le dispositif ( 7, 9 ) par le fait que l'opération d'usinage est simulée en utilisant une configuration ( 18 ) de simulation de la machine-outil et un sous-programme ( 19 ) dans lequel la configuration ( 18 ) de simulation n'est pas encore mémorisée et ensuite par le fait que la configuration ( 18 ) de simulation est mémorisée dans le sous-programme ( 19 ) dans lequel la configuration ( 18 ) de simulation n'est pas encore mémorisée.

14. Dispositif suivant la revendication 13, **caractérisé en ce que** la configuration ( 18 ) de mémorisation est mémorisée dans le sous-programme ( 24 ) de manière chiffrée.

15. Machine-outil comprenant un dispositif selon les revendications 8 à 14.
